# EUROPEAN PATENT APPLICATION

(11) **EP 4 776 039 A1**
(43) Date of publication of application: **15.07.2026**
(21) Application number: 24861574.2
(22) Date of filing: 30.05.2024
(51) Int. Cl.: G02B 6/12

(54) **PHOTONIC INTEGRATED CIRCUIT CHIP AND SILICON PHOTONICS INTEGRATED PLATFORM**

(30) Priority: 08.09.2023 CN 202311155520
(71) Applicant: Innolight Technology (Suzhou) Ltd., Suzhou, Jiangsu 215000 (CN)
(72) Inventor: GUO, Defen, Suzhou, Jiangsu 215000 (CN); LI, Xianyao, Suzhou, Jiangsu 215000 (CN)
(74) Representative: Becker, Eberhard
(86) International application number: PCT/CN2024/096368
(87) International publication number: WO 2025/050726

(57) **Abstract**

Disclosed in the present invention are a photonic integrated circuit chip and a silicon photonics integrated platform, aimed at implementing efficient coupling with common single-mode optical fibers by providing a specific waveguide structure on the photonic integrated circuit chip, without introducing a suspended structure, so that the overall structure has high mechanical stability, reliability tests for photonic integrated circuit chips under high temperature and high humidity conditions can be passed, and processes such as reflow soldering and through-silicon vias are feasible.

## Description

This disclosure claims priority to the Chinese Patent Application titled "PHOTONIC INTEGRATED CIRCUIT CHIP AND SILICON PHOTONICS INTEGRATED PLATFORM," Application Number: 202311155520.5, filed on September 8, 2023, the entire contents of which are incorporated herein by reference.

### Technical Field

The present disclosure relates to the field of optical communication technology, and particularly relates to a photonic integrated circuit chip and a silicon photonics integrated platform.

### Description of Related Art

In recent years, photonic integrated circuit (PIC) chips can effective reduce the cost and power consumption of modules in optical communications, and serve as a critical technology for achieving optical interconnects. The mode field of a typical single-mode silicon photonics waveguide is on the nanometer scale, whereas a mode field diameter (MFD) of a common single-mode optical fiber, which requires coupling alignment with a photonic integrated circuit chip (such as a silicon photonics chip), is approximately 9µm to 10µm. This discrepancy results in a significant mode field mismatch, leading to a small direct coupling alignment tolerance and substantial optical coupling losses.

### SUMMARY OF DISCLOSURE

The purpose of the present disclosure lies in providing a photonic integrated circuit chip and a silicon photonics integrated platform for improving an optical coupling efficiency between the photonic integrated circuit chip and an external optical fiber.

The purpose of the present disclosure is implemented by the following technical solutions:
According to an aspect of the present disclosure, a photonic integrated circuit chip is provided, including: a support silicon, a first silicon oxide layer, and a second silicon oxide layer arranged in a stacked manner;
The photonic integrated circuit chip includes an optical device configured in the first silicon oxide layer and a device waveguide optically connected to the optical device, and a side of the photonic integrated circuit chip has an outer end surface coupled externally;
At least one first metal layer is further configured in the first silicon oxide layer, and in a thickness direction of the support silicon, the at least one first metal layer is located between the optical device and the support silicon;
The photonic integrated circuit chip further includes a first waveguide, the first waveguide is configured in the first silicon oxide layer or the second silicon oxide layer, the first waveguide is optically coupled to the device waveguide, in a direction perpendicular to the thickness direction of the support silicon, the first waveguide extends from the interior of the photonic integrated circuit chip toward the outer end surface, the first waveguide is configured to have a first mode size on a side away from the outer end surface and a second mode size on a side close to the outer end surface, wherein the first mode size is greater than the second mode size.

Further, in the thickness direction of the support silicon, a spacing between the first waveguide and the support silicon is greater than half of a mode field diameter of an external optical fiber to be optically coupled to the photonic integrated circuit chip.

Further, in a direction pointing from the interior of the photonic integrated circuit chip toward the outer end surface, a portion of the first waveguide has a reverse wedge structure.

Optionally, a quantity of the first waveguides is one or more;
When the quantity of the first waveguides is more than one, the plurality of first waveguides are located in a same film layer and placed side by side, and at least one of the plurality of first waveguides gradually tapers toward the outer end surface.

Further, in a case where the first waveguide is configured in the first silicon oxide layer, the photonic integrated circuit chip further includes a second waveguide, the second waveguide is located in the second silicon oxide layer, the second waveguide is optically coupled to the first waveguide and is spaced apart from the first waveguide in the thickness direction; in the direction perpendicular to the thickness direction of the support silicon, the second waveguide extends from the interior of the photonic integrated circuit chip toward the outer end surface.

Further, in the direction pointing from the interior of the photonic integrated circuit chip toward the outer end surface, a portion of the second waveguide has a reverse wedge structure.

Further, in the direction perpendicular to the thickness direction of the support silicon, an extension length of the second waveguide is less than an extension length of the first waveguide, and an end portion of the second waveguide close to the outer end surface is aligned with an end portion of the first waveguide close to the outer end surface.

Further, a quantity of the second waveguides is more than one, and the quantity of the first waveguides is more than one;

At a cross-sectional position close to a plane where the outer end surface is located, a combination of the plurality of second waveguides and the plurality of first waveguides is arranged in multiple rows and/or multiple columns.

Further, at the cross-sectional position close to the plane where the outer end surface is located, between adjacent rows and/or columns, the plurality of second waveguides and the plurality of first waveguides are arranged in a staggered arrangement or an irregular arrangement.

Further, at least one second waveguide of the plurality of second waveguides has an unchanged cross-sectional width pointing from the interior of the photonic integrated circuit chip toward the outer end surface.

Further, the photonic integrated circuit chip further includes a third waveguide, the third waveguide is located in the first silicon oxide layer, the third waveguide is optically coupled with the first waveguide and the second waveguide respectively, and the third waveguide is spaced apart from the first waveguide and the second waveguide respectively in the thickness direction; in the thickness direction of the support silicon, the third waveguide is located between the first waveguide and the second waveguide; in the direction perpendicular to the thickness direction of the support silicon, the third waveguide extends from the interior of the photonic integrated circuit chip toward the outer end surface.

Further, the third waveguide and the device waveguide are both located in the first silicon oxide layer.

Further, in the direction perpendicular to the thickness direction of the support silicon, an extension length of the third waveguide is greater than the extension length of the first waveguide, the third waveguide is optically connected with the device waveguide, and an end portion of the third waveguide close to the outer end surface is aligned with the end portion of the first waveguide close to the outer end surface.

Further, in a cross-sectional direction close to the outer end surface, the plurality of the first waveguides and the plurality of the second waveguides surround a periphery of the third waveguide.

Further, the photonic integrated circuit chip further includes a fourth waveguide, the fourth waveguide is located in the second silicon oxide layer, the fourth waveguide is optically coupled with the first waveguide and the second waveguide respectively, and the fourth waveguide is spaced apart from the first waveguide and the second waveguide respectively in the thickness direction; in the direction perpendicular to the thickness direction of the support silicon, the fourth waveguide extends from the interior of the photonic integrated circuit chip toward the outer end surface; in the thickness direction of the support silicon, the fourth waveguide is located on a side of the second waveguide away from the first waveguide.

Further, in the direction pointing from the interior of the photonic integrated circuit chip toward the outer end surface, a portion of the fourth waveguide has a reverse wedge structure.

Further, in the direction perpendicular to the thickness direction of the support silicon, an extension length of the fourth waveguide is less than the extension length of the first waveguide, and an end portion of the fourth waveguide close to the outer end surface is aligned with the end portion of the first waveguide close to the outer end surface.

Further, in a case where the first waveguide is configured in the second silicon oxide layer, the photonic integrated circuit chip further includes a fifth waveguide, the fifth waveguide is located in the second silicon oxide layer, the fifth waveguide is optically coupled with the first waveguide and is spaced apart from the first waveguide in the thickness direction; in the direction perpendicular to the thickness direction of the support silicon, the fifth waveguide extends from the interior of the photonic integrated circuit chip toward the outer end surface; in the thickness direction of the support silicon, the fifth waveguide is located on a side of the first waveguide away from the first silicon oxide layer.

Further, in the direction pointing from the interior of the photonic integrated circuit chip toward the outer end surface, a portion of the fifth waveguide has a reverse wedge structure.

Further, in the direction perpendicular to the thickness direction of the support silicon, an extension length of the fifth waveguide is less than the extension length of the first waveguide, and an end portion of the fifth waveguide close to the outer end surface is aligned with the end portion of the first waveguide close to the outer end surface.

Further, the photonic integrated circuit chip further includes a sixth waveguide, the sixth waveguide is located in the first silicon oxide layer, the sixth waveguide is optically coupled with the first waveguide and is spaced apart from the first waveguide in the thickness direction;

In the direction perpendicular to the thickness direction of the support silicon, the sixth waveguide extends from the interior of the photonic integrated circuit chip toward the outer end surface.

Further, in the direction pointing from the interior of the photonic integrated circuit chip toward the outer end surface, a portion of the sixth waveguide has a reverse wedge structure.

Further, in the direction perpendicular to the thickness direction of the support silicon, an extension length of the sixth waveguide is less than the extension length of the first waveguide, and an end portion of the sixth waveguide close to the outer end surface is aligned with the end portion of the first waveguide close to the outer end surface.

Further, at least one second metal layer is further configured in the second silicon oxide layer, and the at least one second metal layer is electrically connected with the at least one first metal layer through metal vias.

Further, the photonic integrated circuit chip further includes a third silicon oxide layer,

Wherein, in the thickness direction of the support silicon, the third silicon oxide layer is configured between the first silicon oxide layer and the support silicon.

Further, the photonic integrated circuit chip further includes a protective layer, and the protective layer covers a surface of the second silicon oxide layer on a side away from the first silicon oxide layer, wherein, a material of the protective layer is silicon nitride.

Further, the optical device includes one or a combination of a photodetector, a laser, a modulator and a wavelength division multiplexer.

According to yet another aspect of the present disclosure, a silicon photonics integrated platform is further provided, including any of the aforementioned photonic integrated circuit chips;

An optical fiber, the optical fiber including an optical fiber core and an optical fiber cladding covering the optical fiber core;

Wherein, the optical fiber is aligned with the outer end surface of the photonic integrated circuit chip to perform optical coupling.

Further, a groove is configured at a cross-sectional position of the support silicon close to the outer end surface, and the optical fiber is placed in the groove.

The present disclosure provides a solution for optical interconnection between the photonic integrated circuit chip and the optical fiber, aiming to configure a specific waveguide structure on the photonic integrated circuit chip to achieve efficient coupling with a common single-mode optical fiber, while not introducing a suspended structure, so that the overall structure have high mechanical stability, enabling the photonic integrated circuit chip to pass reliability tests under high temperature and high humidity conditions, and being compatible with reflow soldering and through-silicon via processes and so on.

Further, a distance from an edge coupler structure for coupling to a substrate during optical interconnection of the photonic integrated circuit may be optimized, so that an optical field will not leak into the substrate, and positions and key dimensions of single-layer waveguides and multi-layer waveguides within the edge coupler structure may also be flexibly arranged as needed.

### BRIEF DESCRIPTION OF THE DRAWINGS

In order to more clearly illustrate the technical solutions in the embodiments of the present application, the drawings required for use in the description of the embodiments will be briefly introduced below. Clearly, the drawings in the following description are only some embodiments of the present application. For those skilled in the art, other implementations may also be obtained according to these drawings without creative effort.
FIG. 1 shows a schematic structural view of a photonic integrated circuit chip provided by a first embodiment of the present application.
FIG. 2 shows cross-sectional views of an edge coupler structure of a photonic integrated circuit chip provided in FIG. 1 at a position 1 and a position 2.
FIG. 3 shows a schematic structural view of a photonic integrated circuit chip manufactured based on a semiconductor on insulator according to an embodiment of the present application.
FIG. 4 shows a schematic structural view of a photonic integrated circuit chip provided by a second embodiment of the present application.
FIG. 5 shows a first example of cross-sectional views of an edge coupler structure of a photonic integrated circuit chip provided in FIG. 4 at a position 1, a position 2 and a position 3.
FIG. 6 shows a second example of cross-sectional views of an edge coupler structure of a photonic integrated circuit chip provided in FIG. 4 at a position 1, a position 2 and a position 3.
FIG. 7 shows a third example of cross-sectional views of an edge coupler structure of a photonic integrated circuit chip provided in FIG. 4 at a position 1, a position 2 and a position 3.
FIG. 8 shows a fourth example of cross-sectional views of an edge coupler structure of a photonic integrated circuit chip provided in FIG. 4 at a position 1, a position 2 and a position 3.
FIG. 9 shows a fifth example of cross-sectional views of an edge coupler structure of a photonic integrated circuit chip provided in FIG. 4 at a position 1, a position 2 and a position 3.
FIG. 10 shows a schematic structural view of a photonic integrated circuit chip provided by a third embodiment of the present application.
FIG. 11 shows cross-sectional views of an edge coupler structure of a photonic integrated circuit chip provided in FIG. 10 at a position 1, a position 2 and a position 3.
FIG. 12 shows a schematic structural view of a photonic integrated circuit chip provided by a fourth embodiment of the present application.
FIG. 13A shows cross-sectional views of an edge coupler structure of a photonic integrated circuit chip provided in FIG. 12 at a position 1, a position 2 and a position 3.
FIG. 13B shows cross-sectional views of an edge coupler structure of a photonic integrated circuit chip provided in FIG. 12 at a position 1, a position 2 and a position 3.
FIG. **14** shows a schematic structural view of a photonic integrated circuit chip provided by a fifth embodiment of the present application.
FIG. 15 shows a schematic structural view of a photonic integrated circuit chip provided by a sixth embodiment of the present application.
FIG. 16 shows a schematic structural view of a photonic integrated circuit chip provided by a seventh embodiment of the present application.
FIG. 17 shows another cross-sectional views of an edge coupler structure of a photonic integrated circuit chip provided in FIG. 16 at a position 1, a position 2 and a position 3.
FIG. 18 shows a schematic structural view of a photonic integrated circuit chip provided by an eighth embodiment of the present application.
FIG. 19 shows another cross-sectional view of an edge coupler structure of a photonic integrated circuit chip provided in FIG. 18 at a position 1.
FIG. 20 shows a schematic structural view of a silicon photonics integrated platform provided by an embodiment of the present application.
FIG. 21 shows a schematic cross-sectional view of a silicon photonics integrated platform provided by an embodiment of the present application.

### DESCRIPTION OF THE EMBODIMENTS

The above description is only an overview of the technical solutions of the present disclosure. In order to understand the technical means of the present disclosure more clearly, the implementation may be carried out according to the content of the specification. In order to make the above and other objectives, features and advantages of the present disclosure more comprehensible, preferred embodiments are specifically listed below and described in detail in conjunction with the accompanying drawings as follows.

In the description of the present disclosure, it should be noted that unless otherwise explicitly specified and limited, the terms "install", "connect", "connection" should be understood in a broad sense. For example, it may be a fixed connection, a detachable connection, or an integral connection; it may be a mechanical connection, an electrical connection, or mutual communication; it may be a direct connection, or an indirect connection through an intermediate medium, or an internal communication between two elements or an interaction relationship between two elements. The meaning of chip herein may include bare chip. When involving method steps, the sequence illustrated herein represents an exemplary solution, but does not represent a limitation on the sequence. For those of ordinary skill in the art, the specific meanings of the above terms in the present disclosure may be understood according to specific circumstances.

The term "substrate" used herein may refer to a substrate of a diced wafer, or may refer to a substrate of an undiced wafer. It should be understood that the term "thin film" includes layer, and should not be interpreted as indicating vertical or horizontal thickness unless otherwise specified. It should be noted that a thickness of each material layer of an edge coupler structure shown in the figures is only schematic and does not represent the actual thickness.

In order to make the objectives, features and advantages of the present disclosure more comprehensible, the present disclosure is further described in detail below in conjunction with the accompanying drawings and specific embodiments.

In commonly used technologies, photonic integrated circuit chips are fabricated using silicon waveguides based on a Silicon On Insulator (SOI) structure, where a top layer silicon is utilized. A silicon oxide layer (BOX layer) situated between a bottom layer silicon and the top layer silicon typically has a thickness ranging from 0.7µm to 3µm, and the silicon waveguide itself generally has a thickness between 150nm and 340nm. To ensure effective coupling between the silicon waveguide and a SiN waveguide positioned above it, a spacing between the silicon waveguide and the SiN waveguide is typically maintained below 500nm. Consequently, in commonly used technologies, a vertical distance of a film layer containing the SiN waveguide from the bottom layer silicon is typically less than 4µm. To ensure efficient coupling between the photonic integrated circuit chip and a common single-mode optical fiber (whose mode field diameter is usually between 9µm and 10µm), a mode field diameter of the spot near an end surface of the edge coupler must also measure 9µm to 10µm. As a result, the optical field inevitably leaks into the bottom layer silicon, introducing additional loss.

In addition, in common technology, in order to improve a coupling efficiency of the edge coupler, the bottom layer silicon below a corresponding region of key portions of some edge couplers is partially etched away to form a suspended structure. Although this may eliminate the loss of optical field leaking into the bottom layer silicon, the existence of this suspended structure will lead to low mechanical stability of its structure, which is prone to collapse in subsequent processes (for example, it is extremely easy to break during wafer dicing and chip packaging), making it difficult to pass the reliability test conditions required for photonic integrated circuit chips, and also incompatible with processes such as reflow soldering and through-silicon via of photonic integrated circuit chips, resulting in higher manufacturing costs.

In view of this, one aspect of the present disclosure provides a photonic integrated circuit chip for solving the problem of optical field leaking to the bottom layer silicon of the photonic integrated circuit chip. The photonic integrated circuit chip includes: a support silicon, a first silicon oxide layer and a second silicon oxide layer arranged in a stacked manner. The photonic integrated circuit chip includes an optical device configured in the first silicon oxide layer and a device waveguide optically connected to the optical device, a side of the photonic integrated circuit chip has an outer end surface coupled externally. At least one first metal layer is also configured in the first silicon oxide layer. In a thickness direction of the support silicon, the at least one first metal layer is located between the optical device and the support silicon. The photonic integrated circuit chip further includes a first waveguide. The first waveguide is configured in the first silicon oxide layer or the second silicon oxide layer. The first waveguide is optically coupled with the device waveguide. In a direction perpendicular to the thickness direction of the support silicon, the first waveguide extends from the interior of the photonic integrated circuit chip toward the outer end surface. The first waveguide is configured to have a first mode size on a side away from the outer end surface and have a second mode size on a side close to the outer end surface, wherein the first mode size is greater than the second mode size.

As can be seen from the above, the present application aims to achieve efficient coupling with common single-mode optical fiber by setting a specific waveguide structure on the photonic integrated circuit chip (PIC chip), while not introducing a suspended structure, so that the overall structure has high mechanical stability, enabling the photonic integrated circuit chip to pass reliability tests under high temperature and high humidity conditions, and being compatible with reflow soldering and through-silicon via processes and so on.

### Embodiment 1

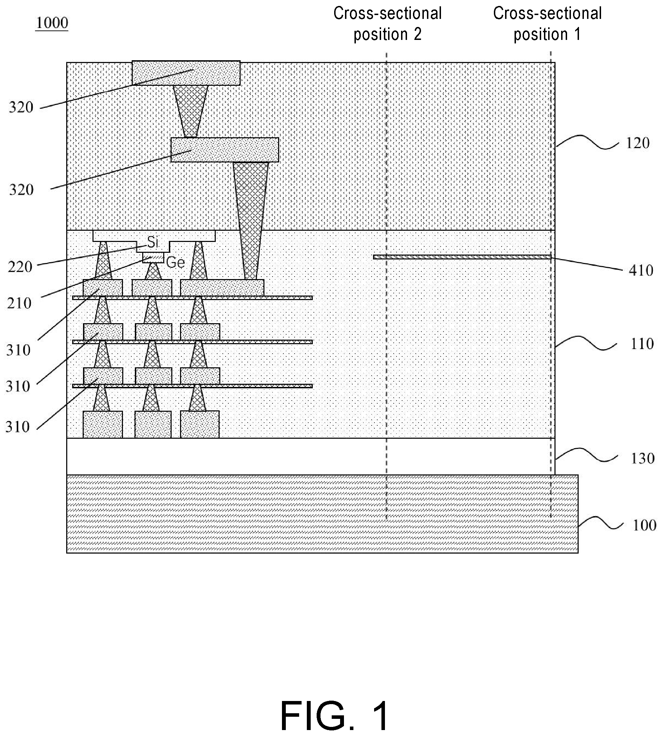

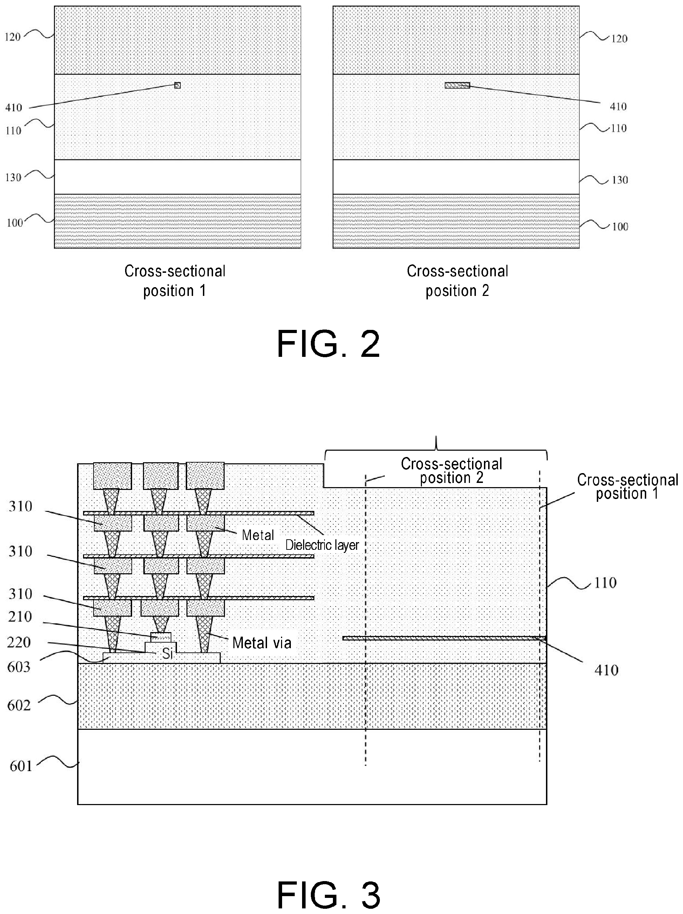

FIG. 1 shows a schematic structural view of the photonic integrated circuit chip provided by a first embodiment of the present application, and FIG. 2 shows cross-sectional views of the edge coupler structure of the photonic integrated circuit chip provided in FIG. 1 at a position 1 and a position 2.

As shown in FIG. 1 and FIG. 2, a photonic integrated circuit chip 1000 provided by the first embodiment of the present application includes: a support silicon 100, a first silicon oxide layer 110 and a second silicon oxide layer 120 arranged in a stacked manner.

The photonic integrated circuit chip 1000 includes an optical device 210 configured in the first silicon oxide layer 110 and a device waveguide 220 optically connected to the optical device 210. In a direction perpendicular to a thickness direction of the support silicon 100, the photonic integrated circuit chip 1000 has an outer end surface coupled externally. That is, a side of the photonic integrated circuit chip 1000 is configured with the outer end surface coupled externally.

At least one first metal layer 310 is also configured in the first silicon oxide layer 110. In the thickness direction of the support silicon 100, the at least one first metal layer 310 is located between the optical device 210 and the support silicon 100.

The photonic integrated circuit chip 1000 further includes a first waveguide 410, and the first waveguide 410 is configured in the first silicon oxide layer 110. The first waveguide 410 is optically coupled to the device waveguide 220. In the direction perpendicular to the thickness direction of the support silicon 100, the first waveguide 410 extends from the interior of the photonic integrated circuit chip toward the outer end surface. The first waveguide 410 is configured to have a first mode size on a side away from the outer end surface and a second mode size on a side close to the outer end surface. The first mode size is greater than the second mode size.

Further, in the thickness direction of the support silicon 100, a spacing between the first waveguide **410** and the support silicon 100 is greater than half of a mode field diameter of an external optical fiber optically coupled to the photonic integrated circuit chip.

In an embodiment of the present disclosure, by designing the spacing between the first waveguide 410 and the support silicon 100 in the photonic integrated circuit chip 1000 to be greater than half of the mode field diameter of the external optical fiber optically coupled thereto, that is, through the technical solution provided by the embodiment of the present disclosure, the spacing between the first waveguide 410 and the support silicon 100 may be made greater than 4.5µm to 5µm, thereby solving the problem of optical field leakage from the photonic integrated circuit chip to the support silicon (substrate), while not introducing a suspended structure, the overall structure have high mechanical stability, enabling the photonic integrated circuit chip to pass reliability tests under high temperature and high humidity conditions, and being compatible with reflow soldering and through-silicon via processes and so on.

In the present embodiment, the device waveguide 220, the optical device 210 and the first waveguide 410 in the photonic integrated circuit chip may be manufactured based on a semiconductor on insulator, and the semiconductor on insulator may be, for example, SOI (Silicon-On-Insulator). Exemplarily, as shown in FIG. 3, the semiconductor on insulator may include: an insulating layer 602, a semiconductor layer 603 formed on the insulating layer 602, and a substrate layer 601 located below the insulating layer 602. The substrate layer 601 is also referred to as a back substrate (or back substrate layer), and the semiconductor layer 603 may be silicon, also referred to as top layer silicon. Processes such as patterning, deposition, and doping may be performed on the semiconductor layer 603 to form a portion of the photonic integrated circuit chip 1000. Specifically, the device waveguide 220 is formed based on etching a portion of the semiconductor layer 603, and the optical device 210 may include one or a combination of a photodetector, a laser, a modulator and a wavelength division multiplexer. For example, the photodetector includes a light absorption layer (such as a germanium layer). In a thickness direction of the substrate layer 601, the light absorption layer is configured on a side of the device waveguide 220 away from the substrate layer 601. The insulating layer 602 is, for example, a silicon oxide buried layer. The optical device 210 includes a portion of the device waveguide 220 and the light absorption layer.

Exemplarily, as shown in FIG. 1 to FIG. 3, the device waveguide 220, the optical device 210, the first silicon oxide layer 110, the at least one first metal layer 310 located within the first silicon oxide layer 110, and the first waveguide 410 are respectively fabricated on the substrate layer 601 (such as the bottom layer silicon of the SOI structure). After completion, an oxide layer 130 (such as a SiO₂ film layer) may be deposited or bonded on a surface of the first silicon oxide layer 110 on a side away from the substrate layer 601, so as to planarize the surface of the first silicon oxide layer 110 on the side away from the substrate layer 601. Then the support silicon 100 is bonded to the oxide layer located on the surface of the first silicon oxide layer 110 on the side away from the substrate layer 601. Next, the entire structure having both the substrate layer 601 and the support silicon 100 is flipped upside down, so that the support silicon 100 is at the bottom and the substrate layer 601 is at the top. Thereafter, the substrate layer 601 is removed to obtain the first silicon oxide layer 110 located above the support silicon 100, and the at least one first metal layer 310, the optical device 210, the device waveguide 220 and the first waveguide 410 located within the first silicon oxide layer 110. At this point, a spacing between the first waveguide 410 and the support silicon 100 is sufficiently large. By designing a quantity of the at least one first metal layer 310 within the first silicon oxide layer 110 or a film thickness, the spacing between the first waveguide 410 and the support silicon 100 may be easily designed to be greater than half of the mode field diameter of the external optical fiber optically coupled to the photonic integrated circuit chip (the mode field diameter of the common single-mode optical fiber is 9µm to 10µm), so as to avoid the optical field of the photonic integrated circuit chip leaking into the support silicon 100.

Exemplarily, in this embodiment, the device waveguide 220 is a silicon waveguide, and the first waveguide 410 is a silicon nitride waveguide or a silicon oxynitride waveguide. The material of silicon typically has a relatively high refractive index, an actual mode size that a silicon waveguide may achieve is about 2µm to 5µm, while the material of silicon nitride or silicon oxynitride has a lower refractive index compared to the material of silicon, therefore the silicon nitride waveguide or the silicon oxynitride waveguide (first waveguide) may achieve a larger mode size than the silicon waveguide (device waveguide).

In some embodiments, as shown in FIG. 1 and FIG. 2, in a direction pointing from the interior of the photonic integrated circuit chip 1000 toward the outer end surface, a portion of the first waveguide 410 has a reverse wedge structure.

Optionally, a quantity of the first waveguide 410 is one or more; when the quantity of the first waveguide 410 is more than one, the plurality of first waveguides 410 are located in the same film layer and placed side by side. At this point, the edge coupler structure for mode spot conversion is composed of the plurality of first waveguides 410 arranged in parallel, and at least one of the plurality of first waveguides 410 gradually tapers toward the outer end surface, so that the mode spot of the optical field may gradually expand in the direction pointing from the interior of the photonic integrated circuit chip 1000 toward the outer end surface.

In some embodiments, when the at least one first metal layer 310 includes a plurality of first metal layers 310, in the thickness direction of the support silicon 100, metal vias are further configured between two adjacent first metal layers 310 in the first silicon oxide layer 110, and the plurality of first metal layers 310 achieve electrical connection between the first metal layers 310 or with other devices through the metal vias.

Further, at least one second metal layer 320 is further configured in the second silicon oxide layer 120, and the at least one second metal layer 320 is electrically connected to the at least one first metal layer 310 through metal vias.

### Embodiment 2

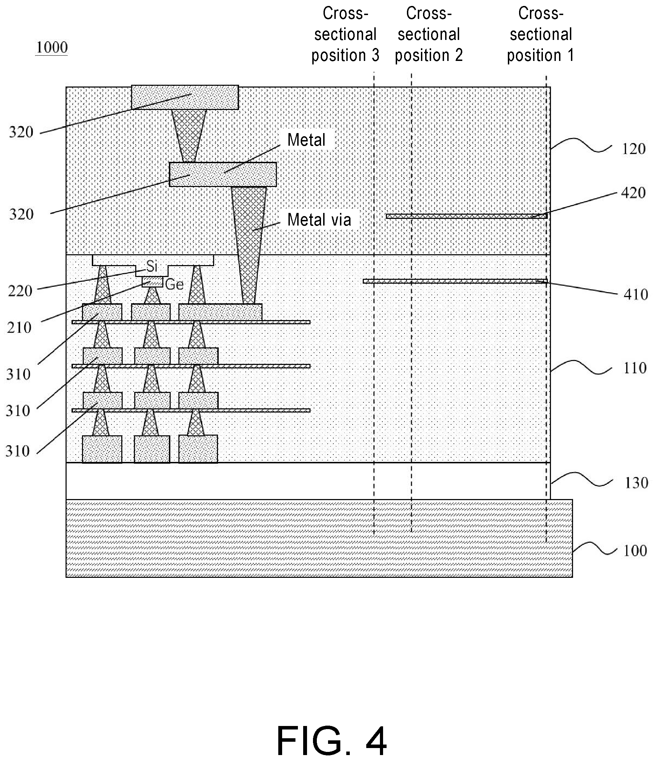

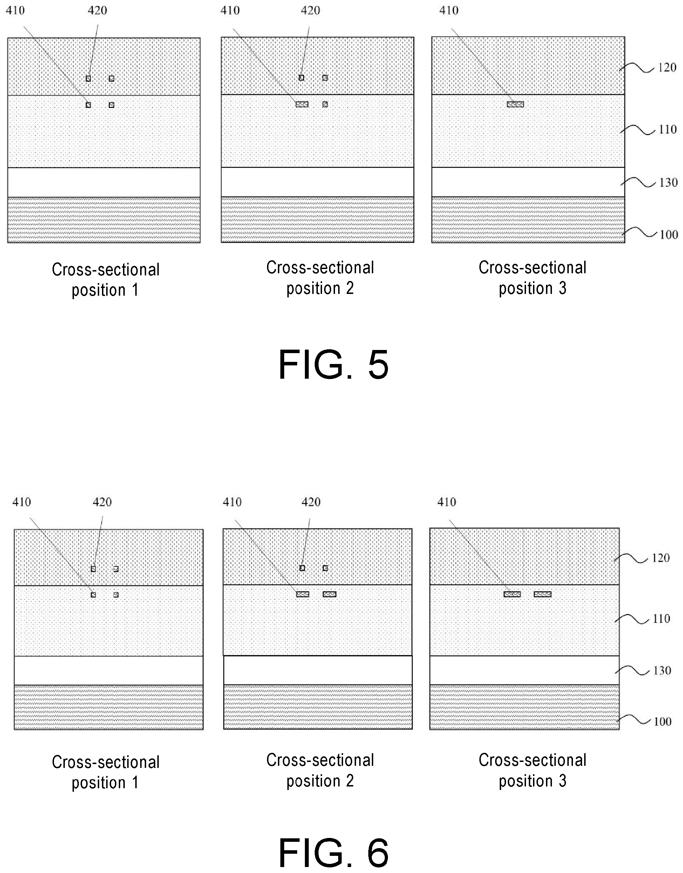

FIG. 4 shows a schematic structural view of a photonic integrated circuit chip provided by the second embodiment of the present application. FIG. 5 shows a first example of cross-sectional views of an edge coupler structure of a photonic integrated circuit chip provided in FIG. 4 at a position 1, a position 2 and a position 3.

As shown in FIG. 4 and FIG. 5, in the second embodiment of the present application, in the case where the first waveguide 410 is configured in the first silicon oxide layer 110, the photonic integrated circuit chip 1000 further includes a second waveguide 420. The second waveguide 420 is located in the second silicon oxide layer 120. The second waveguide 420 is optically coupled with the first waveguide 410 and is spaced apart from the first waveguide 410 in the thickness direction. In the direction perpendicular to the thickness direction of the support silicon 100, the second waveguide 420 extends from the interior of the photonic integrated circuit chip 1000 toward the outer end surface.

In Embodiment 2, compared to Embodiment 1, on the basis of providing a single layer of first waveguide 410, the second waveguide 420 configured in a different layer from the first waveguide 410 is additionally provided. Moreover, in the thickness direction of the support silicon 100, a spacing between the second waveguide 420 and the first waveguide 410 is less than or equal to a preset spacing (for example, 500nm), so that the second waveguide 420 is optically coupled with the first waveguide 410. At this point, the photonic integrated circuit chip 1000 has multiple layers of waveguides. Since the mode field diameter of the single-layer waveguide is typically more sensitive to the morphology or dimension of the single-layer waveguide itself, this may cause the mode spot size of the optical field at a cross-sectional position 1 close to the outer end surface of the photonic integrated circuit chip to be too large or too small, which is not conducive to adjustment; while using multiple layers of waveguides, the multiple layers of waveguides jointly participate in the mode spot conversion of the optical field, which may reduce the sensitivity of the morphology or dimension of the single-layer waveguide itself to the mode field diameter of the single-layer waveguide while ensuring coupling efficiency.

Specifically, the second waveguide 420 is located in the second silicon oxide layer 120, that is, the second waveguide 420 is also supported and covered by the SiO₂ film layer. The light coupled from the first waveguide 410 expands into the silicon oxide around the second waveguide 420 after mode spot conversion through the second waveguide 420, and the size of the optical field mode spot is jointly adjusted by the first waveguide 410 and the second waveguide 420, ultimately achieving matching with the mode field of the external optical fiber.

Optionally, a quantity of the second waveguides 420 is one or more.

Optionally, in the direction pointing from the interior of the photonic integrated circuit chip 1000 toward the outer end surface, a portion of the second waveguide 420 has a reverse wedge structure.

Further, in the direction perpendicular to the thickness direction of the support silicon 100, an extension length of the second waveguide 420 is less than an extension length of the first waveguide 410, and an end portion of the second waveguide 420 close to the outer end surface is aligned with an end portion of the first waveguide 410 close to the outer end surface.

In some embodiments, the quantity of the second waveguides 420 is more than one, and the quantity of the first waveguides 410 is more than one. At a cross-sectional position close to a plane where the outer end surface is located, a combination of the multiple second waveguides 420 and the multiple first waveguides 410 is arranged in multiple rows and/or multiple columns. In this embodiment, the first waveguide 410 and the second waveguide 420 are configured to perform mode spot conversion on the light coupled from the device waveguide 220 (for example, expanding the mode spot size of the light) and then transmit the light to the external optical fiber, or to perform mode spot conversion on the light input from the external optical fiber (for example, shrinking the mode spot size of the light), and couple the light after mode spot conversion to the device waveguide 220.

In some embodiments, at least one second waveguide 420 among the multiple second waveguides 420 has an unchanged cross-sectional width pointing from the interior of the photonic integrated circuit chip 1000 toward the outer end surface. Exemplarily, as shown in FIG. 5, at a cross-sectional position 2 of the photonic integrated circuit chip 1000 away from the outer end surface and at the cross-sectional position 1 of the photonic integrated circuit chip 1000 close to the outer end surface, the two second waveguides 420 have an unchanged cross-sectional width.

Optionally, the second waveguide 420 is a silicon nitride waveguide or a silicon oxynitride waveguide.

Exemplarily, as shown in FIG. 5, at a cross-sectional position 3 away from an edge of the photonic integrated circuit chip 1000, there is only one first waveguide 410 in the lower layer, the cross-sectional dimension of this first waveguide 410 is relatively large, and the optical field is mainly limited in this first waveguide 410. At the cross-sectional position 2 away from the edge of the photonic integrated circuit chip 1000, there are simultaneously two first waveguides 410 and two second waveguides 420. The cross-sectional dimension of the first waveguide 410 located on the left side of the lower layer is relatively large, the cross-sectional dimension of the other first waveguide 410 is relatively small, the cross-sectional dimensions of the two second waveguides 420 located in the upper layer are also relatively small, and the optical field is mainly limited in the first waveguide 410 on the left side of the lower layer. At the cross-sectional position 1 of the photonic integrated circuit chip 1000 close to the outer end surface, the dimensions of the two first waveguides 410 located in the lower layer and the two second waveguides 420 located in the upper layer are all small, and the optical field is jointly limited by the two first waveguides 410 in the lower layer, the two second waveguides 420 in the upper layer, and the surrounding silicon oxide. The upper and lower layers of waveguides jointly participate in the adjustment of the mode spot size of the optical field, and on the basis of ensuring coupling efficiency, the sensitivity of the mode field diameter of the single-layer waveguide to the morphology or dimension of the single-layer waveguide itself is reduced.

During the process from the cross-sectional position 3 to the cross-sectional position 1, the cross-sectional dimension of the first waveguide 410 located on the left side of the lower layer may change linearly or non-linearly. The cross-sectional dimensions of the first waveguide 410 located on the right side of the lower layer and the two second waveguides 420 located in the upper layer may change or remain unchanged. The heights of the two second waveguides 420 located in the upper layer may be the same or different; the heights of the two first waveguides 410 located in the lower layer may be the same or different.

FIG. 6 shows a second example of cross-sectional views of the edge coupler structure of the photonic integrated circuit chip provided in FIG. 4 at the position 1, the position 2 and the position 3.

As shown in FIG. 6, compared to FIG. 5, in this example, from the cross-sectional position 2 to the cross-sectional position 1, the two first waveguides 410 located in the lower layer in the photonic integrated circuit chip both gradually taper toward the outer end surface, while the cross-sectional dimensions of the two second waveguides 420 located in the upper layer remain unchanged toward the outer end surface. At this point, the mode spot conversion is simultaneously achieved by the changes of the two first waveguides 410 located in the lower layer.

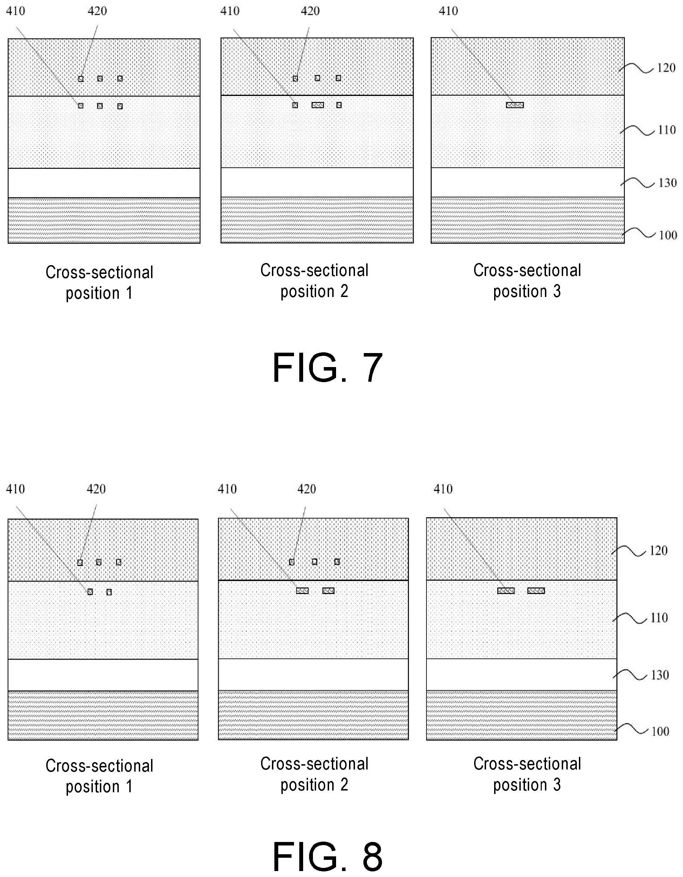

FIG. 7 shows a third example of cross-sectional views of the edge coupler structure of the photonic integrated circuit chip provided in FIG. 4 at the position 1, the position 2 and the position 3.

As shown in FIG. 7, compared to FIG. 5 and FIG. 6, exemplarily, the quantity of the first waveguides 410 located in the lower layer is greater than two, for example, three, and the quantity of the second waveguides 420 located in the upper layer is also greater than two, for example, three.

Exemplarily, at the cross-sectional position 3 of the photonic integrated circuit chip away from the outer end surface, there is only one first waveguide 410 in the middle of the lower layer. The cross-sectional dimension of this first waveguide 410 is relatively large, and the optical field is mainly limited in the first waveguide 410. At the cross-sectional position 2 of the photonic integrated circuit chip away from the outer end surface, there are simultaneously three first waveguides 410 and three second waveguides 420. The cross-sectional dimension of the first waveguide 410 in the middle of the lower layer is relatively large, and the cross-sectional dimensions of the other two first waveguides 410 and the three second waveguides 420 located in the upper layer are relatively small. The optical field is mainly limited in the first waveguide 410 in the middle of the lower layer. At the cross-sectional position 1 of the photonic integrated circuit chip close to the outer end surface, the dimensions of the three first waveguides 410 located in the lower layer and the three second waveguides 420 located in the upper layer are all relatively small, and the optical field is jointly limited by the three first waveguides 410 in the lower layer, the three second waveguides 420 in the upper layer, and the surrounding silicon oxide.

FIG. 8 shows a fourth example of cross-sectional views of the edge coupler structure of the photonic integrated circuit chip provided in FIG. 4 at the position 1, the position 2 and the position 3.

As shown in FIG. 8, compared to FIG. 5, FIG. 6, and FIG. 7, the quantity of the first waveguides 410 located in the lower layer is two, and the quantity of the second waveguides 420 located in the upper layer is three.

Exemplarily, at the cross-sectional position 3 of the photonic integrated circuit chip away from the outer end surface, there are only two first waveguides 410 in the lower layer. The cross-sectional dimensions of the two first waveguides 410 are relatively large, and the optical field is mainly limited in the first waveguides 410. At the cross-sectional position 2 of the photonic integrated circuit chip away from the outer end surface, there are simultaneously two first waveguides 410 and three second waveguides 420. The cross-sectional dimensions of the two first waveguides 410 located in the lower layer are relatively large, and the cross-sectional dimensions of the three second waveguides 420 located in the upper layer are relatively small, and the optical field is mainly limited in the two first waveguides 410 in the lower layer. At the cross-sectional position 1 of the photonic integrated circuit chip close to the outer end surface, the dimensions of the two first waveguides 410 located in the lower layer and the three second waveguides 420 located in the upper layer are all relatively small. The optical field is jointly limited by the two first waveguides 410 in the lower layer, the three second waveguides 420 in the upper layer, and the surrounding silicon oxide.

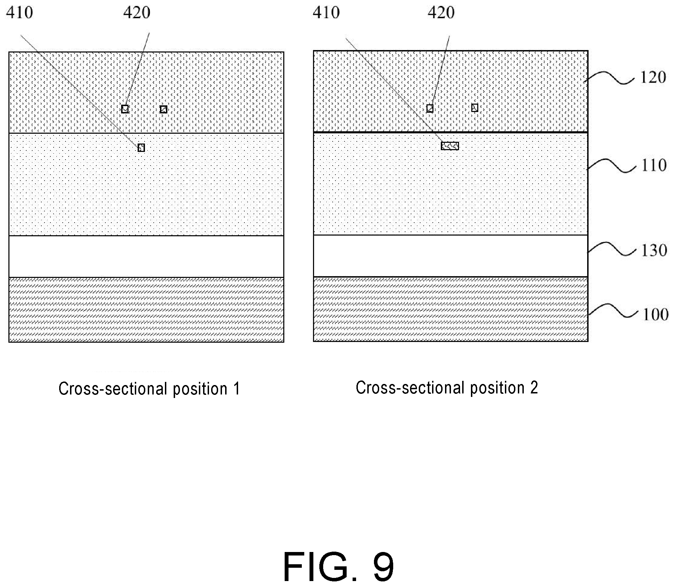

FIG. 9 shows a fifth example of cross-sectional views of the edge coupler structure of the photonic integrated circuit chip provided in FIG. 4 at the position 1 and the position 2.

As shown in FIG. 9, compared to FIG. 5, FIG. 6, FIG. 7, and FIG. 8, the quantity of the first waveguides 410 located in the lower layer is one, and the quantity of the second waveguides 420 located in the upper layer is two.

Exemplarily, at the cross-sectional position 2 of the photonic integrated circuit chip away from the outer end surface, there are simultaneously one first waveguide 410 and two second waveguides 420. The cross-sectional dimension of the first waveguide 410 located in the lower layer is relatively large, and the cross-sectional dimensions of the two second waveguides 420 located in the upper layer are relatively small, and the optical field is mainly limited in one first waveguide 410 in the lower layer. At the cross-sectional position 1 of the photonic integrated circuit chip close to the outer end surface, the dimensions of one first waveguide 410 located in the lower layer and the two second waveguides 420 located in the upper layer are all relatively small. The optical field is jointly limited by one first waveguide 410 in the lower layer, the two second waveguides 420 in the upper layer, and the surrounding silicon oxide.

### Embodiment 3

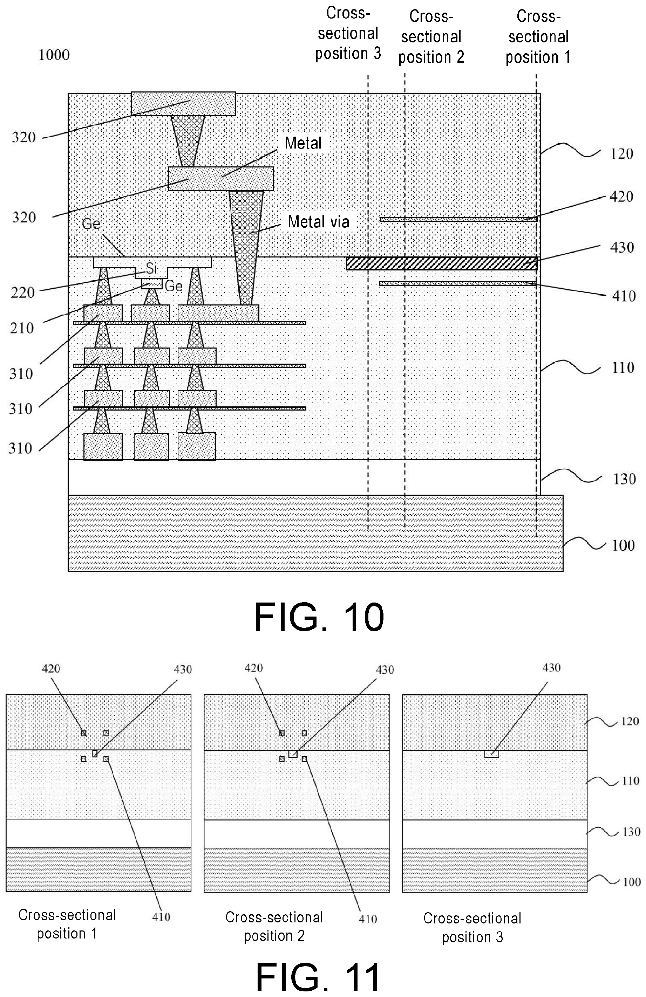

FIG. 10 shows a schematic structural view of a photonic integrated circuit chip provided by a third embodiment of the present application. FIG. 11 shows cross-sectional views of an edge coupler structure of the photonic integrated circuit chip provided in FIG. 10 at the position 1, the position 2 and the position 3.

As shown in FIG. 10 and FIG. 11, in the third embodiment of the present application, the photonic integrated circuit chip 1000 further includes a third waveguide 430. The third waveguide 430 is located in the first silicon oxide layer 110. The third waveguide 430 is optically connected with the device waveguide 220. The third waveguide 430 is a silicon waveguide, and the third waveguide 430 is optically coupled with the first waveguide 410 and the second waveguide 420 respectively. Furthermore, the third waveguide 430 is spaced apart from the first waveguide 410 and the second waveguide 420 respectively in the thickness direction. In the thickness direction of the support silicon 100, the third waveguide 430 is located between the first waveguide 410 and the second waveguide 420. In the direction perpendicular to the thickness direction of the support silicon 100, the third waveguide 430 extends from the interior of the photonic integrated circuit chip 1000 toward the outer end surface.

Further, in some embodiments, the third waveguide 430 and the device waveguide 220 are both located in the first silicon oxide layer 110.

Further, in the direction perpendicular to the thickness direction of the support silicon 100, an extension length of the third waveguide 430 is greater than the extension length of the first waveguide 410, and the third waveguide 430 is optically connected with the device waveguide 220, so that the optical field leaving the device waveguide 220 may be directly converted onto the third waveguide 430 to avoid unnecessary loss of optical energy. Moreover, an end portion of the third waveguide 430 close to the outer end surface is aligned with the end portion of the first waveguide 410 close to the outer end surface.

Optionally, a quantity of the third waveguides 430 is one or more.

Further, in the cross-sectional direction close to the outer end surface, the plurality of first waveguides 410 and the plurality of second waveguides 420 surround a periphery of the third waveguide 430.

Exemplarily, as shown in FIG. 11, at the cross-sectional position 3 of the photonic integrated circuit chip away from the outer end surface, there is only one third waveguide 430 in an intermediate layer. The cross-sectional dimension of the third waveguide 430 is relatively large, and the optical field is mainly limited in the third waveguide 430. At the cross-sectional position 2 of the photonic integrated circuit chip away from the outer end surface, there are simultaneously two first waveguides 410 and two second waveguides 420 as well as one third waveguide 430, and the optical field is still mainly limited in the one third waveguide 430 located in the middle. At the cross-sectional position 1 of the photonic integrated circuit chip close to the outer end surface, the dimensions of the two first waveguides 410 located in the lower layer, the two second waveguides 420 located in the upper layer, and the third waveguide 430 located in the intermediate layer are all relatively small, and the optical field is jointly limited by the two first waveguides 410 in the lower layer, the two second waveguides 420 in the upper layer, the third waveguide 430 in the intermediate layer, and the surrounding silicon oxide.

### Embodiment 4

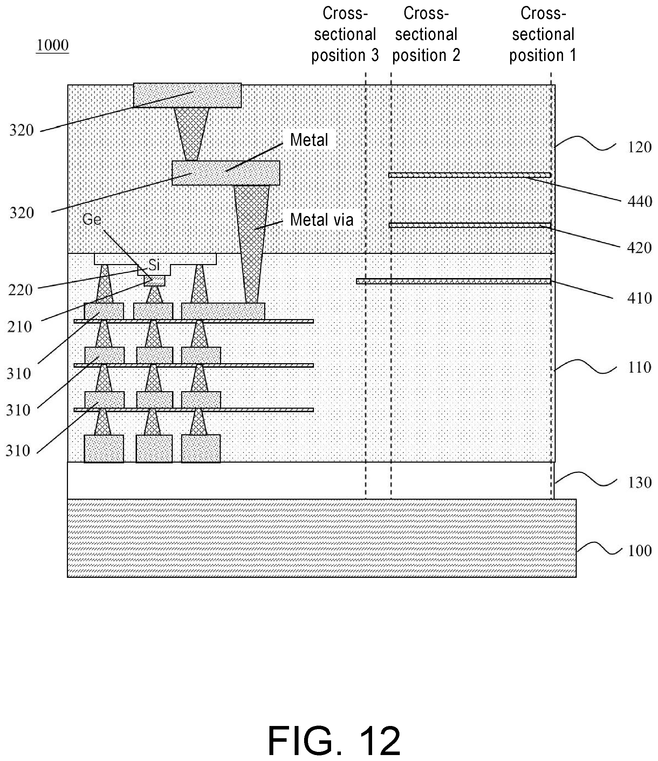

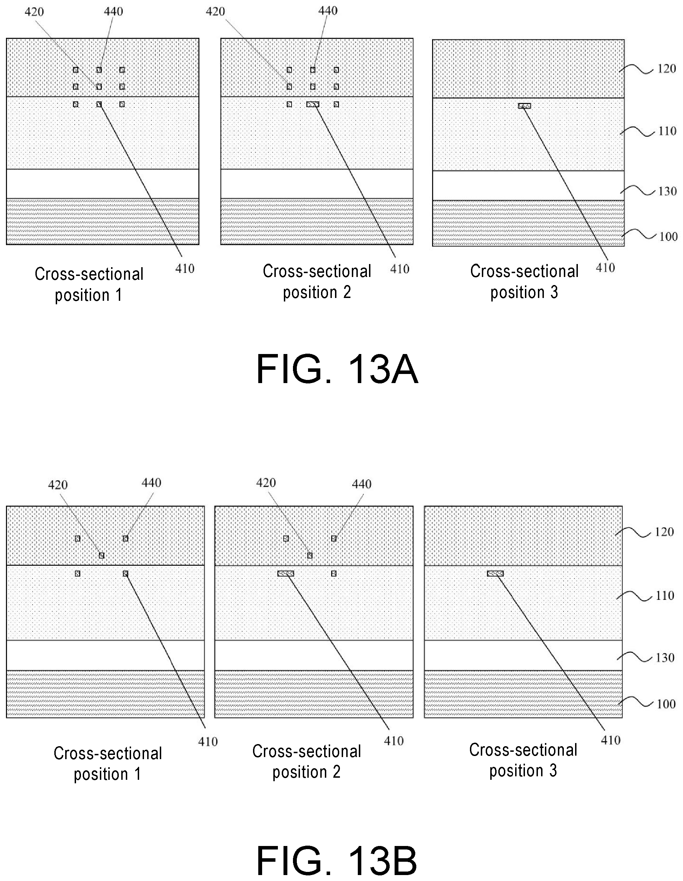

FIG. 12 shows a schematic structural view of a photonic integrated circuit chip provided by the fourth embodiment of the present application. FIG. 13A shows cross-sectional views of an edge coupler structure of the photonic integrated circuit chip provided in FIG. 12 at the position 1, the position 2 and the position 3. FIG. 13B shows cross-sectional views of the edge coupler structure of the photonic integrated circuit chip provided in FIG. 12 at the position 1, the position 2 and the position 3.

As shown in FIG. 12, in the fourth embodiment of the present application, the photonic integrated circuit chip 1000 further includes a fourth waveguide 440. The fourth waveguide 440 is located in the second silicon oxide layer 120, and the fourth waveguide 440 is optically coupled with the first waveguide 410 and the second waveguide 420 respectively. Moreover, the fourth waveguide 440 is spaced from the first waveguide 410 and the second waveguide 420 respectively in the thickness direction. In the direction perpendicular to the thickness direction of the support silicon 100, the fourth waveguide 440 extends from the interior of the photonic integrated circuit chip 1000 toward the outer end surface. In the thickness direction of the support silicon 100, the fourth waveguide 440 is located on a side of the second waveguide 420 away from the first waveguide 410.

Optionally, in the direction pointing from the interior of the photonic integrated circuit chip 1000 toward the outer end surface, a portion of the fourth waveguide 440 has a reverse wedge structure.

Further, in the direction perpendicular to the thickness direction of the support silicon 100, an extension length of the fourth waveguide 440 is less than the extension length of the first waveguide 410, and an end portion of the fourth waveguide 440 close to the outer end surface is aligned with the end portion of the first waveguide 410 close to the outer end surface.

Specifically, as shown in FIG. 13A and FIG. 13B, the fourth embodiment of the present application involves a process in which three layers of silicon nitride waveguides or silicon oxynitride waveguides participate in edge coupling. The first waveguide 410 located in the lowermost layer extends from the cross-sectional position 1 all the way to the cross-sectional position 3.

Exemplarily, as shown in FIG. 13A, at the cross-sectional position 3 of the photonic integrated circuit chip away from the outer end surface, there is only one first waveguide 410 in the lower layer. The cross-sectional dimension of the first waveguide 410 is relatively large, and the optical field is mainly limited in the first waveguide 410. At the cross-sectional position 2 of the photonic integrated circuit chip away from the outer end surface, there are simultaneously three first waveguides 410, three second waveguides 420, and three fourth waveguides 440. The cross-sectional dimension of the first waveguide 410 located in the middle of the lower layer is relatively large, and the cross-sectional dimensions of the three fourth waveguides 440 located in the upper layer and the three second waveguides 420 located in the intermediate layer are relatively small, and the optical field is mainly limited in one first waveguide 410 in the middle of the lower layer. At the cross-sectional position 1 of the photonic integrated circuit chip close to the outer end surface, the cross-sectional dimensions of the two first waveguides 410 located in the lower layer, the three second waveguides 420 located in the intermediate layer, and the three fourth waveguides 440 located in the upper layer are all small. The optical field is jointly limited by the three first waveguides 410 in the lower layer, the three second waveguides 420 in the intermediate layer, the three fourth waveguides 440 in the upper layer, and the surrounding silicon oxide. At this point, the light coupled in from the exterior of the photonic integrated circuit chip 1000 is finally coupled into the first waveguide 410 in the lowermost layer.

Exemplarily, as shown in FIG. 13B, at the cross-sectional position 3 of the photonic integrated circuit chip away from the outer end surface, there is only one first waveguide 410 in the lower layer. The cross-sectional dimension of the first waveguide 410 is relatively large, and the optical field is mainly limited in the first waveguide 410. At the cross-sectional position 2 of the photonic integrated circuit chip away from the outer end surface, there are simultaneously two first waveguides 410, one second waveguide 420, and two fourth waveguides 440. The cross-sectional dimension of the first waveguide 410 located on the left side of the lower layer is relatively large, and the cross-sectional dimensions of the two fourth waveguides 440 located in the upper layer and one second waveguide 420 located in the intermediate layer are relatively small. The optical field is mainly limited in one first waveguide 410 on the left side of the lower layer. At the cross-sectional position 1 of the photonic integrated circuit chip close to the outer end surface, the dimensions of the two first waveguides 410 located in the lower layer, the two fourth waveguides 440 located in the upper layer, and one second waveguide 420 located in the intermediate layer are all relatively small, and the optical field is jointly limited by the two first waveguides 410 in the lower layer, one second waveguide 420 in the intermediate layer, the two fourth waveguides 440 in the upper layer, and the surrounding silicon oxide. At this point, the light coupled in from the exterior of the photonic integrated circuit chip 1000 is finally coupled into the first waveguide 410 in the lowermost layer.

### Embodiment 5

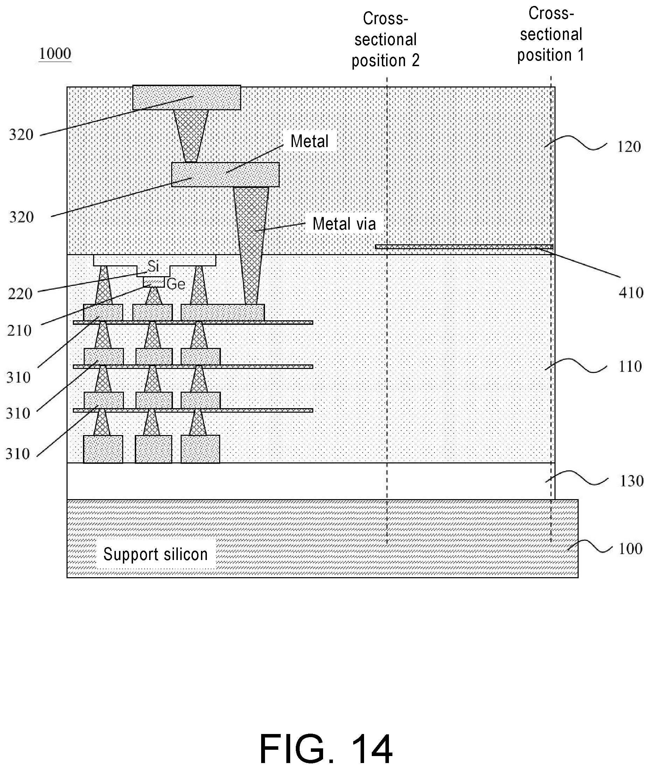

FIG. 14 shows a schematic structural view of a photonic integrated circuit chip provided by the fifth embodiment of the present application.

As shown in FIG. 14, in the fifth embodiment of the present application, the first waveguide 410 is configured in the second silicon oxide layer 120. At this point, based on a front-end process of the device waveguide 220 of the photonic integrated circuit chip (including fabricating at least one corresponding functional layer on the device waveguide 220), after the fabrication is completed, the first waveguide 410 is fabricated on a side of the device waveguide 220 facing away from the support silicon 100. Since there are relatively few metal layers on a back side of the device waveguide 220, the degree of freedom regarding the position where the first waveguide 410 is configured is relatively high.

### Embodiment 6

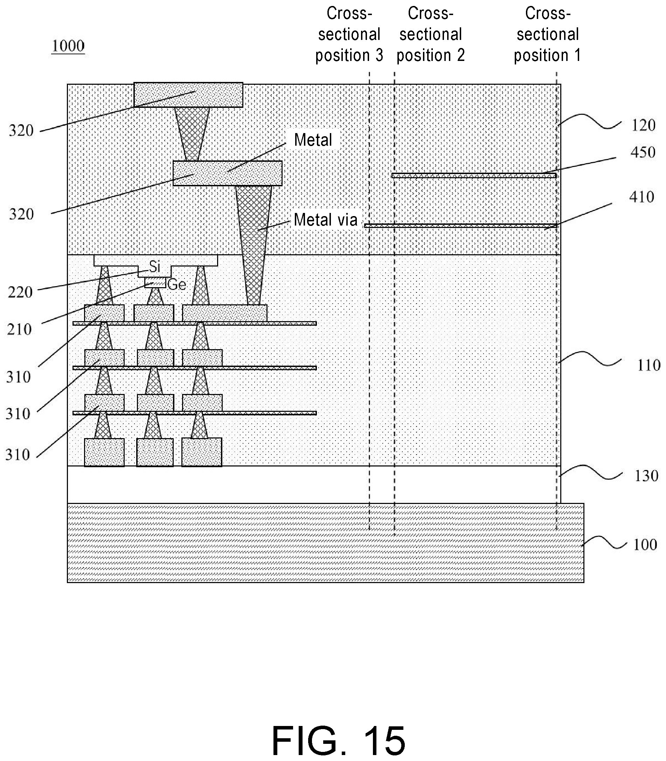

FIG. 15 shows a schematic structural view of a photonic integrated circuit chip provided by the sixth embodiment of the present application.

As shown in FIG. 15, in the sixth embodiment of the present application, in the case where the first waveguide 410 is configured in the second silicon oxide layer 120, the photonic integrated circuit chip 1000 further includes a fifth waveguide 450. The fifth waveguide 450 is located in the second silicon oxide layer 120, and the fifth waveguide 450 is optically coupled with the first waveguide 410 and is spaced apart from the first waveguide 410 in the thickness direction. In the direction perpendicular to the thickness direction of the support silicon 100, the fifth waveguide 450 extends from the interior of the photonic integrated circuit chip 1000 toward the outer end surface. In the thickness direction of the support silicon 100, the fifth waveguide 450 is located on a side of the first waveguide 410 away from the first silicon oxide layer 110.

Optionally, a quantity of the fifth waveguides 450 is one or more.

Further, in the direction pointing from the interior of the photonic integrated circuit chip 1000 toward the outer end surface, a portion of the fifth waveguide 450 has a reverse wedge structure.

Further, in the direction perpendicular to the thickness direction of the support silicon 100, an extension length of the fifth waveguide 450 is less than the extension length of the first waveguide 410, and an end portion of the fifth waveguide 450 close to the outer end surface is aligned with the end portion of the first waveguide 410 close to the outer end surface.

### Embodiment 7

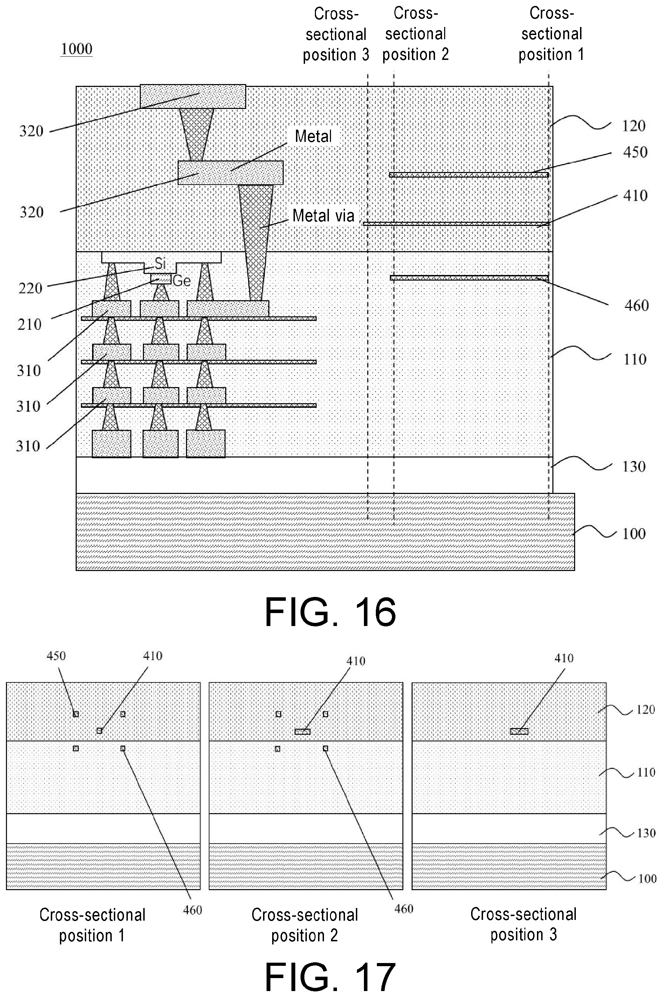

FIG. 16 shows a schematic structural view of a photonic integrated circuit chip provided by the seventh embodiment of the present application. FIG. 17 shows another cross-sectional views of an edge coupler structure of the photonic integrated circuit chip provided in FIG. 16 at the position 1, the position 2 and the position 3.

As shown in FIG. 16 to FIG. 17, in the seventh embodiment of the present application, based on the sixth embodiment, the photonic integrated circuit chip 1000 further includes a sixth waveguide 460. The sixth waveguide 460 is located in the first silicon oxide layer 110, and the sixth waveguide 460 is optically coupled with the first waveguide 410 and is spaced apart from the first waveguide 410 in the thickness direction. In the direction perpendicular to the thickness direction of the support silicon 100, the sixth waveguide 460 extends from the interior of the photonic integrated circuit chip 1000 toward the outer end surface.

Optionally, a quantity of the sixth waveguides 460 is one or more.

Further, in the direction pointing from the interior of the photonic integrated circuit chip 1000 toward the outer end surface, a portion of the sixth waveguide 460 has a reverse wedge structure.

Exemplarily, as shown in FIG. 17, at the cross-sectional position 3 of the photonic integrated circuit chip away from the outer end surface, there is only one first waveguide 410 in the intermediate layer, the cross-sectional dimension of the first waveguide 410 is relatively large, and the optical field is mainly limited in the first waveguide 410. At the cross-sectional position 2 of the photonic integrated circuit chip away from the outer end surface, there are simultaneously one first waveguide 410, two fifth waveguides 450 and two sixth waveguides 460. The cross-sectional dimension of the first waveguide 410 located in the intermediate layer is relatively large, and the cross-sectional dimensions of the two fifth waveguides 450 located in the upper layer and one sixth waveguide 460 located in the lower layer are relatively small, and the optical field is mainly limited in one first waveguide 410 in the intermediate layer. At the cross-sectional position 1 of the photonic integrated circuit chip close to the outer end surface, the dimensions of the two sixth waveguides 460 located in the lower layer, one first waveguide 410 located in the intermediate layer and the fifth waveguides 450 located in the upper layer are all small, and the optical field is jointly limited by the two sixth waveguides 460 in the lower layer, one first waveguide 410 in the intermediate layer, the two fifth waveguides 450 in the upper layer and the surrounding silicon oxide. At this point, the light coupled in from the exterior of the photonic integrated circuit chip 1000 is finally coupled into the first waveguide 410 in the middlemost layer.

### Embodiment 8

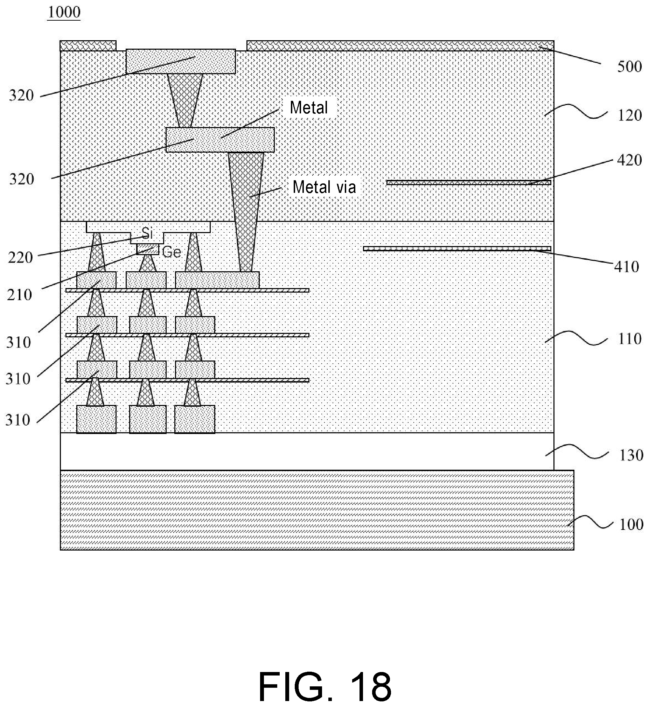

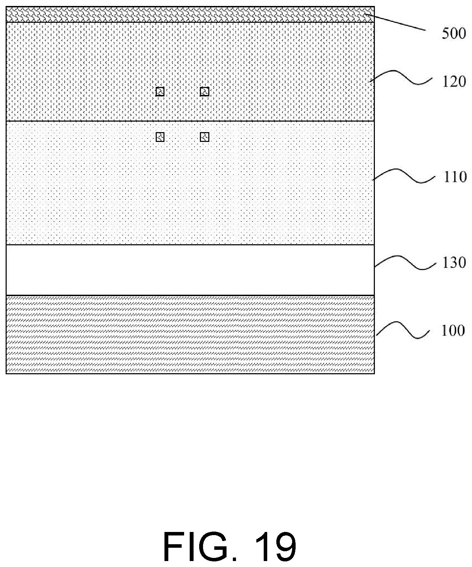

FIG. 18 shows a schematic structural view of a photonic integrated circuit chip provided by the eighth embodiment of the present application. FIG. 19 shows another cross-sectional view of an edge coupler structure of the photonic integrated circuit chip provided in FIG. 18 at the position 1.

As shown in FIG. 18 and FIG. 19, in the seventh embodiment of the present application, compared with the second embodiment, in order to prevent moisture from entering the silicon oxide on the upper side of the photonic integrated circuit chip during long-term use and causing performance degradation of the edge waveguide, and at the same time to prevent the surface of the photonic integrated circuit chip from being easily affected by various contaminants during bump, TSV and other processes, the photonic integrated circuit chip further includes a protective layer 500. The protective layer 500 covers a surface of the second silicon oxide layer 120 on a side away from the first silicon oxide layer 110. A material of the protective layer 500 is silicon nitride.

Further, the protective layer also contributes to improving the surface scratch resistance of the photonic integrated circuit chip.

According to another aspect of the present disclosure, a silicon photonics integrated platform is further provided, including the photonic integrated circuit chip according to any of the foregoing embodiments; an optical fiber, the optical fiber including an optical fiber core and an optical fiber cladding covering the optical fiber core, wherein, the optical fiber is aligned with the outer end surface of the photonic integrated circuit chip for optical coupling.

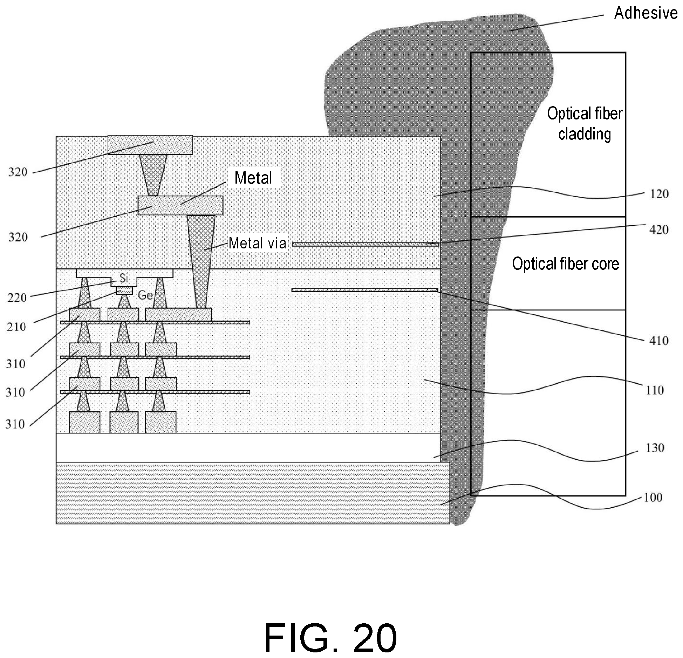

FIG. 20 shows a schematic structural view of a silicon photonics integrated platform provided by an embodiment of the present application.

Exemplarily, as shown in FIG. 20, after the optical fiber and the photonic integrated circuit chip are coupled and aligned by active alignment, they are fixed to an outer end of the edge coupler structure of the photonic integrated circuit chip through an adhesive.

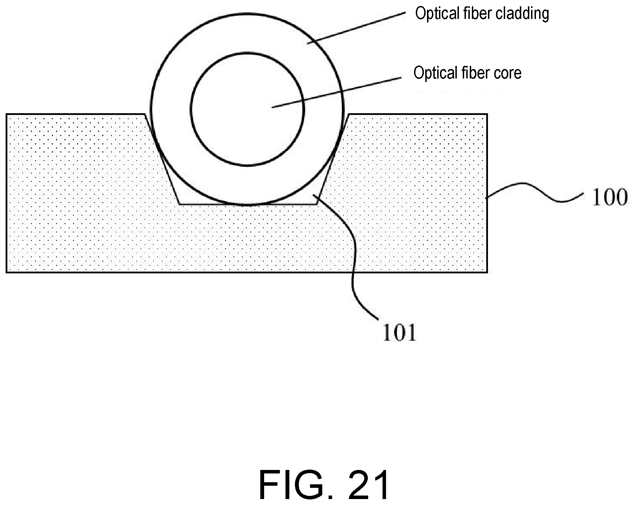

FIG. 21 shows a schematic cross-sectional view of a silicon photonics integrated platform provided by an embodiment of the present application.

Exemplarily, as shown in FIG. 21, in order to limit the position movement of the optical fiber, a groove 101 is configured at the cross-sectional position of the support silicon close to the outer end surface. The optical fiber is placed in the groove 101.

Exemplarily, the groove 101 is a V-shaped groove, so that the optical fiber core and the optical fiber cladding are exactly placed in the V-shaped groove, and then the adhesive is employed to secure the optical fiber.

It should be noted that "first", "second", "third", "fourth", "fifth" and "sixth" herein are intended to distinguish different objects, rather than to sort the objects and limit the quantity of the objects.

The embodiments of the present disclosure provide a solution for optical interconnection between the photonic integrated circuit chip and the optical fiber, aiming to configure a specific waveguide structure on the photonic integrated circuit chip to achieve efficient coupling with a common single-mode optical fiber, while not introducing a suspended structure, so that the overall structure have high mechanical stability, enabling the photonic integrated circuit chip to pass reliability tests under high temperature and high humidity conditions, and being compatible with reflow soldering and through-silicon via processes and so on.

Further, a distance from an edge coupler structure for coupling to a substrate during optical interconnection of the photonic integrated circuit may be optimized, so that an optical field will not leak into the substrate, and positions and key dimensions of single-layer waveguides and multi-layer waveguides within the edge coupler structure may also be flexibly arranged as needed.

The above are only preferred embodiments of the present disclosure, and are not intended to limit the scope of implementation of the present disclosure. All equivalent changes and modifications made according to the shapes, structures, features and spirit described in the scope of the claims of the present disclosure should be included in the scope of the claims of the present disclosure.

## Claims

1. A photonic integrated circuit chip, **characterized in** comprising: a support silicon, a first silicon oxide layer, and a second silicon oxide layer arranged in a stacked manner;
wherein the photonic integrated circuit chip comprises an optical device configured in the first silicon oxide layer and a device waveguide optically connected to the optical device, and a side of the photonic integrated circuit chip has an outer end surface coupled externally;
at least one first metal layer is further configured in the first silicon oxide layer, and in a thickness direction of the support silicon, the at least one first metal layer is located between the optical device and the support silicon;
the photonic integrated circuit chip further comprises a first waveguide, the first waveguide is configured in the first silicon oxide layer or the second silicon oxide layer, the first waveguide is optically coupled to the device waveguide, in a direction perpendicular to the thickness direction of the support silicon, the first waveguide extends from an interior of the photonic integrated circuit chip toward the outer end surface, the first waveguide is configured to have a first mode size on a side away from the outer end surface and a second mode size on a side close to the outer end surface, wherein the first mode size is greater than the second mode size.

2. The photonic integrated circuit chip according to claim 1, **characterized in that**,
in the thickness direction of the support silicon, a spacing between the first waveguide and the support silicon is greater than half of a mode field diameter of an external optical fiber to be optically coupled to the photonic integrated circuit chip.

3. The photonic integrated circuit chip according to claim 2, **characterized in that**,
in a direction pointing from the interior of the photonic integrated circuit chip toward the outer end surface, a portion of the first waveguide has a reverse wedge structure.

4. The photonic integrated circuit chip according to claim 2, **characterized in that**,
a quantity of the first waveguides is one or more;
when the quantity of the first waveguides is more than one, the plurality of first waveguides are located in a same film layer and placed side by side, and at least one of the plurality of first waveguides gradually tapers toward the outer end surface.

5. The photonic integrated circuit chip according to claim 2, **characterized in that**,
in a case where the first waveguide is configured in the first silicon oxide layer, the photonic integrated circuit chip further comprises a second waveguide, the second waveguide is located in the second silicon oxide layer, the second waveguide is optically coupled to the first waveguide and is spaced apart from the first waveguide in the thickness direction;
in the direction perpendicular to the thickness direction of the support silicon, the second waveguide extends from the interior of the photonic integrated circuit chip toward the outer end surface.

6. The photonic integrated circuit chip according to claim 5, **characterized in that**,
in a direction pointing from the interior of the photonic integrated circuit chip toward the outer end surface, a portion of the second waveguide has a reverse wedge structure.

7. The photonic integrated circuit chip according to claim 5, **characterized in that**,
in the direction perpendicular to the thickness direction of the support silicon, an extension length of the second waveguide is less than an extension length of the first waveguide, and an end portion of the second waveguide close to the outer end surface is aligned with an end portion of the first waveguide close to the outer end surface.

8. The photonic integrated circuit chip according to claim 7, **characterized in that**,
a quantity of the second waveguides is more than one, and a quantity of the first waveguides is more than one;
at a cross-sectional position close to a plane where the outer end surface is located, a combination of the plurality of second waveguides and the plurality of first waveguides is arranged in multiple rows and/or multiple columns.

9. The photonic integrated circuit chip according to claim 8, **characterized in that**,
at the cross-sectional position close to the plane where the outer end surface is located, between adjacent rows and/or columns, the plurality of second waveguides and the plurality of first waveguides are arranged in a staggered arrangement or an irregular arrangement.

10. The photonic integrated circuit chip according to claim 7, **characterized in that**,
at least one second waveguide of the plurality of second waveguides has an unchanged cross-sectional width pointing from the interior of the photonic integrated circuit chip toward the outer end surface.

11. The photonic integrated circuit chip according to claim 5, **characterized in that**,
the photonic integrated circuit chip further comprises a third waveguide, the third waveguide is located in the first silicon oxide layer, the third waveguide is optically coupled with the first waveguide and the second waveguide respectively, and the third waveguide is spaced apart from the first waveguide and the second waveguide respectively in the thickness direction;
in the thickness direction of the support silicon, the third waveguide is located between the first waveguide and the second waveguide;
in the direction perpendicular to the thickness direction of the support silicon, the third waveguide extends from the interior of the photonic integrated circuit chip toward the outer end surface.

12. The photonic integrated circuit chip according to claim 11, **characterized in that**,
the third waveguide and the device waveguide are both located in the first silicon oxide layer.

13. The photonic integrated circuit chip according to claim 11, **characterized in that**,
in the direction perpendicular to the thickness direction of the support silicon, an extension length of the third waveguide is greater than an extension length of the first waveguide, the third waveguide is optically connected with the device waveguide, and an end portion of the third waveguide close to the outer end surface is aligned with an end portion of the first waveguide close to the outer end surface.

14. The photonic integrated circuit chip according to claim 13, **characterized in that**,
in a cross-sectional direction close to the outer end surface, a plurality of the first waveguides and a plurality of the second waveguides surround a periphery of the third waveguide.

15. The photonic integrated circuit chip according to claim 5, **characterized in that**,
the photonic integrated circuit chip further comprises a fourth waveguide, the fourth waveguide is located in the second silicon oxide layer, the fourth waveguide is optically coupled with the first waveguide and the second waveguide respectively, and the fourth waveguide is spaced apart from the first waveguide and the second waveguide respectively in the thickness direction;
in the direction perpendicular to the thickness direction of the support silicon, the fourth waveguide extends from the interior of the photonic integrated circuit chip toward the outer end surface;
in the thickness direction of the support silicon, the fourth waveguide is located on a side of the second waveguide away from the first waveguide.

16. The photonic integrated circuit chip according to claim 15, **characterized in that**,
in a direction pointing from the interior of the photonic integrated circuit chip toward the outer end surface, a portion of the fourth waveguide has a reverse wedge structure.

17. The photonic integrated circuit chip according to claim 16, **characterized in that**,
in the direction perpendicular to the thickness direction of the support silicon, an extension length of the fourth waveguide is less than an extension length of the first waveguide, and an end portion of the fourth waveguide close to the outer end surface is aligned with an end portion of the first waveguide close to the outer end surface.

18. The photonic integrated circuit chip according to claim 1, **characterized in that**,
in a case where the first waveguide is configured in the second silicon oxide layer, the photonic integrated circuit chip further comprises a fifth waveguide, the fifth waveguide is located in the second silicon oxide layer, the fifth waveguide is optically coupled with the first waveguide and is spaced apart from the first waveguide in the thickness direction;
in the direction perpendicular to the thickness direction of the support silicon, the fifth waveguide extends from the interior of the photonic integrated circuit chip toward the outer end surface;
in the thickness direction of the support silicon, the fifth waveguide is located on a side of the first waveguide away from the first silicon oxide layer.

19. The photonic integrated circuit chip according to claim 18, **characterized in that**,
in a direction pointing from the interior of the photonic integrated circuit chip toward the outer end surface, a portion of the fifth waveguide has a reverse wedge structure.

20. The photonic integrated circuit chip according to claim 19, **characterized in that**,
in the direction perpendicular to the thickness direction of the support silicon, an extension length of the fifth waveguide is less than an extension length of the first waveguide, and an end portion of the fifth waveguide close to the outer end surface is aligned with an end portion of the first waveguide close to the outer end surface.

21. The photonic integrated circuit chip according to claim 18, **characterized in that**,
the photonic integrated circuit chip further comprises a sixth waveguide, the sixth waveguide is located in the first silicon oxide layer, the sixth waveguide is optically coupled with the first waveguide and is spaced apart from the first waveguide in the thickness direction;
in the direction perpendicular to the thickness direction of the support silicon, the sixth waveguide extends from the interior of the photonic integrated circuit chip toward the outer end surface.

22. The photonic integrated circuit chip according to claim 21, **characterized in that**,
in a direction pointing from the interior of the photonic integrated circuit chip toward the outer end surface, a portion of the sixth waveguide has a reverse wedge structure.

23. The photonic integrated circuit chip according to claim 22, **characterized in that**,
in the direction perpendicular to the thickness direction of the support silicon, an extension length of the sixth waveguide is less than an extension length of the first waveguide, and an end portion of the sixth waveguide close to the outer end surface is aligned with an end portion of the first waveguide close to the outer end surface.

24. The photonic integrated circuit chip according to claim 1, **characterized in that**,
at least one second metal layer is further configured in the second silicon oxide layer, and the at least one second metal layer is electrically connected with the at least one first metal layer through metal vias.

25. The photonic integrated circuit chip according to claim 1, **characterized in that**,
the photonic integrated circuit chip further comprises a third silicon oxide layer,
wherein, in the thickness direction of the support silicon, the third silicon oxide layer is configured between the first silicon oxide layer and the support silicon.

26. The photonic integrated circuit chip according to claim 1, **characterized in that**,
the photonic integrated circuit chip further comprises a protective layer, and the protective layer covers a surface of the second silicon oxide layer on a side away from the first silicon oxide layer;
wherein, a material of the protective layer is silicon nitride.

27. The photonic integrated circuit chip according to claim 1, **characterized in that**,
the optical device comprises one or a combination of a photodetector, a laser, a modulator and a wavelength division multiplexer.

28. A silicon photonics integrated platform, **characterized in** comprising the photonic integrated circuit chip according to any one of claims 1 to 27;
an optical fiber, the optical fiber comprising an optical fiber core and an optical fiber cladding covering the optical fiber core;
wherein, the optical fiber is aligned with the outer end surface of the photonic integrated circuit chip to perform optical coupling.

29. The silicon photonics integrated platform according to claim 28, **characterized in that**,
a groove is configured at a cross-sectional position of the support silicon close to the outer end surface, and the optical fiber is placed in the groove.
